# EUROPÄISCHE PATENTANMELDUNG

(11) **EP 4 202 513 A1**
(43) Veröffentlichungstag der Anmeldung: **28.06.2023**
(21) Anmeldenummer: 22205265.6
(22) Anmeldetag: 03.11.2022
(51) Int. Cl.: G02B 6/38, G02B 6/44, G02B 6/52

(54) **KUPPLUNG FÜR EINBLASSTECKER**

(30) Priorität: 21.12.2021 DE 102021134076
(71) Anmelder: Femotech GmbH, 35756 Mittenaar-Offenbach (DE)
(72) Erfinder: WAGNER, Christian, 35768 Siegbach (DE); WEIL, Michael, 35756 Mittenaar (DE)
(74) Vertreter: Weckenbrock, Matthias

(57) **Zusammenfassung**

Die Erfindung betrifft eine Kupplung (8) zur Verbindung von Lichtwellenleitern, wobei wenigstens zwei Einblasstecker (20) zur Bildung einer Steckverbindung der Lichtwellenleiteranschlüsse in die Kupplung (8) einsteckbar sind und die Einblasstecker (20) wenigstens einen Steckkontakt (1) aufweisen, mittels welchem ein Lichtwellenleiterkabel (2) werksseitig vorkonfektioniert ist und der Steckkontakt (1) einen Ferrulenhalter (4) aufweist, in welchem eine Ferrule (5) zur Aufnahme der Lichtwellenleiter des Lichtwellenleiterkabels (2) gehalten ist, wobei die Einblasstecker (20) eine das Lichtwellenleiterkabel (2) aufnehmende Verriegelung (12a) zum Verbinden des Steckkontakts (1) mit der Kupplung (8) aufweisen und eine Verdrehsicherung zwischen der Verriegelung (12a) und der Kupplung (8) im endmontierten Zustand des Steckers (20) durch die Steckverbindung in Längsrichtung des Lichtwellenleiterkabels (2) zwischen Verriegelung (12a) und Kupplung (8) gebildet ist, so dass die Lage des Lichtwellenleiterkabels (2) im endmontierten Zustand des Einblassteckers (20) in der Kupplung (8) gesichert ist.

## Beschreibung

Die Erfindung betrifft eine Kupplung für einen Einblasstecker nach dem Oberbegriff des Anspruches 1. Ferner betrifft die Erfindung ein Verfahren zum Verlegen von Lichtwellenleiterkabeln gemäß Anspruch 18.

In der Lichtwellenleitertechnik dienen Lichtwellenleiterfasern als Übertragungsmedium für leitungsgebundene Telekommunikationsverfahren. Lichtwellenleiterkabel werden unter anderem zur Anbindung von Gebäuden an Telekommunikationssysteme eingesetzt. Dazu werden die Lichtwellenleiterkabel von Verteilern zu den einzelnen Gebäuden verlegt. Zwischen dem Verteiler und dem jeweiligen Gebäudeanschluss sind üblicherweise Leerrohre mit relativ geringem Durchmesser verlegt. Durch diese Leerrohre können die Lichtwellenleiterkabel hindurchgeschoben oder eingeblasen werden.

Auf das Ende des Lichtwellenleiterkabels sind Stecker montiert, welche gewöhnlich ein standardisiertes Außengehäuse aufweisen, um mit Buchsen bzw. Kupplungen der Anschlussgeräte im Gebäude, in welche der Stecker eingesteckt wird, kompatibel zu sein. Das standardisierte Außengehäuse ist jedoch relativ aufbauend, so dass die Stecker nicht dazu geeignet sind, durch die kleinen Abmessungen der verlegten Leerrohre hindurchgeführt zu werden.

Derartige Stecker sind unter anderem aus der US 7,104,702 B2, US 6,550,979 B1, US 6,387,018 B1 und DE 10 2007 033 246 A1 bekannt.

Die Montage dieser Stecker erfolgt üblicherweise dadurch, dass das Lichtwellenleiterkabel durch das Leerrohr soweit hindurchgeschoben oder "eingeblasen" wird, bis das freie Ende des Lichtwellenleiterkabels gegenüber dem Rohr hervorsteht. Vor Ort wird an dem freien Ende des Lichtwellenleiterkabels dann der Stecker montiert, um daran das Kommunikationssystem des Gebäudes anschließen zu können.

Da die Bearbeitung des Lichtwellenleiterendes sehr präzise erfolgen muss, ist die Montage der Stecker bisher relativ aufwendig und von einem entsprechend geschulten Monteur auszuführen. Der Monteur benötigt dazu spezielle Werkzeuge und Vorrichtungen. Ferner ist im Zuge dieser Arbeiten vor Ort der Dämpfungswiderstand des Lichtwellenleiters zu überprüfen, wofür der Monteur zudem entsprechende Messgeräte benötigt. Aufgrund dieser vor Ort zu erbringenden Arbeiten sind die für den Auftraggeber des Lichtwellenleiteranschlusses anfallenden Kosten relativ hoch.

Aus der DE 103 42 908 A1 ist ein Stecker für eine Steckverbindung von Glasfaseranschlüssen mit einem Steckkontakt bekannt, durch welchen das Glasfaserkabel werksseitig vorkonditioniert werden kann. Die bisher vor Ort von einem Monteur vorzunehmenden Arbeiten zum Anschließen des Lichtwellenleiterkabels können somit bei dem bekannten Stecker bereits vorab im Werk vorgenommen werden. Der Steckkontakt kann aufgrund seiner geringen Abmessungen durch die Leerrohre gezogen bzw. "eingeblasen" werden. Vor Ort ist lediglich das Außengehäuse des Steckers zusammen mit einer Verschlusskappe auf den Steckkontakt zu montieren.

Der vorkonditionierte Steckkontakt umfasst in der Regel eine Ferrule mit einem Ferrulenflansch. Das Aderkabel des Lichtwellenleiters ist mit der Ferrule verbunden. Bei einer Steckverbindung von Glasfaser- bzw. Lichtwellenleiterkabeln berühren sich die zu verbindenden Enden an Stirnflächen der Ferrulen. Die Konfektionierung des Aderkabels mit einer Ferrule erfordert eine hohe Präzision. Das Aderkabel ist daher vorzugsweise mit der Ferrule vorkonfektioniert. Zum Verlegen des Aderkabels kann die Ferrule durch eine geeignete Vorrichtung, beispielsweise eine Kappe, geschützt werden.

Die EP 1 450 187 betrifft einen optischen Stecker mit einem gefederten Steckerstift. Dieser ist an einer Stifthalterung angeordnet, die von der Rückseite her in das Steckergehäuse eingeschoben werden kann. Das Federelement ist jedoch der Stifthalterung zugeordnet und durch eine Aussenhülse geschützt. Dies kompliziert die Vormontage und vergrössert den Aussendurchmesser der Stifthalterung.

Auch die EP 2 115 509 A1 betrifft Steckerteile für eine optische Steckverbindung.

Darüber hinaus gewinnen Verfahren zum Installieren von Glasfasernetzen unter der Verwendung von sogenannten Einblas-Techniken seit jüngerer Zeit mehr an Bedeutung. Mittels Einblasen von Lichtwellenleiterkabeln in bestehende, vorverlegte Röhrensysteme ist es möglich, Lichtwellenleiter auf einfache Art und Weise zu einem gewünschten Ort zu bringen, beispielweise für den Anwendungsbereich "Fiber to the Home" (FTTH).

Ein Einblas-Verfahren sowie eine Vorrichtung zum Einblasen von Lichtwellenleiter-Kabeln sind beispielsweise aus der US 6 572 081 B2 bekannt. Die dort beschriebenen Lichtwellenleiter-Kabel verfügen an ihren Enden über spezielle Führungseinrichtungen, die beim Einblas-Vorgang den mechanischen Belastungen standhalten können. Nach Erreichen der Endposition beim Endkunden werden die Kabel mit Steckerteilen für optische Steckverbindungen ausgerüstet. Dazu werden beispielsweise unter Verwendung von Spleissverfahren werkkonfektionierte Pigtails an die nackten Faserenden der Lichtwellenleiterkabel befestigt, wobei zusätzlich platzraubende Schutztüllen eingebaut werden müssen.

Auch aus der US 2008/0317410 A1 ist ein Verfahren bekannt, bei dem die Kabel mit vorkonfektionierter Steckerkomponente (Ferrule) mittels Druckluft durch Leerrohre mit genügend großem Durchmesser zum Empfangsort gedrückt werden.

Zum Spleißen und Verbinden von Glasfaserleitungen in einem Verteilerschrank sind sogenannte Spleißkassetten bekannt. Üblicherweise haben derartige Spleißkassetten eine sogenannte Crimp-Spleißschutz-Ablage, die eine Platte mit zwei einander gegenüber liegenden Reihen von Fächern aufweist, in die die miteinander zu verbindenden, von beiden Seiten ankommenden Enden von Glasfasern eingelegt werden, die durch V-förmige Metallklammern miteinander verbunden werden. In der Mitte zwischen den beiden Reihen von Fächern befindet sich eine entsprechende Anzahl von Stegen, in die die V-förmigen, mit einem Schutzmaterial für die Glasfasern versehenen Klammern eingesteckt werden. Mit Hilfe dieser Crimp-Spleißschutz-Ablagen werden üblicherweise bis zu zwölf Glasfasern gespleißt und abgelegt. Die Crimp-Spleißschutz-Ablage ist üblicherweise mit der Grundplatte der Spleißkassette verrastet.

Spleißkassetten werden im Allgemeinen in einen Glasfaser-Verteilungsrahmen mit mehreren übereinander angeordneten Fächern oder Paneelen aufgenommen, die jeweils eine größere Anzahl von Kassetten enthalten.

Aus der EP 3 258 302 A1 ist eine derartige Spleißkassette zum Spleißen und Verbinden von Glasfasern in einem Verteilerschrank bekannt.

Die Spleißkassetten können in sogenannten Spleißboxen aufgenommen werden, welche das "Ende" einer Lichtwellenleiterstrecke darstellen, in der die einzelnen Lichtwellenleitern bzw. Lichtwellenleiter aufgefächert werden. Zentrale Bestandteile einer Spleißbox sind die oben erwähnten Spleißkassetten, welche die Lichtwellenleiterkabel sowie deren Reserve aufnehmen, sowie ein Patchpanel, an dem sich unterschiedliche Steckverbinder befinden, an welche dann Patchkabel zur Weiterleitung der Signale angesteckt werden können.

Als hochbelegte Spleißkassetten können sogenannte Blätterkassetten, welche die Ablage mehrerer Spleiße auf den verschiedenen Blättern in einer Spleißbox ermöglichen, vorgesehen werden. Die Kassetten können für alle Fasertypen eingesetzt werden. In den meist Telekom-genormten Ausführungen können 8 bis 12 Fasern untergebracht werden.

Eine derartige Lichtwellenleiter-Spleißbox mit mindestens einem flexibel angeschlossenen Konnektor ist aus der DE 20 2014 102 537 A1 bekannt.

Davon ausgehend liegt der Erfindung die Aufgabe zugrunde, eine Kupplung für wenigstens einen Einblasstecker für eine Steckverbindung von Lichtwellenleiteranschlüssen vorzuschlagen, die sich einfach herstellen lässt und sich durch eine einfache Montierbarkeit auszeichnet. Weiter soll die Kupplung kostengünstig sein und somit beispielsweise für den Anwendungsbereich "Fiber to the Home" (FTTH) geeignet sein.

Zur Lösung der Aufgabe wird eine Kupplung zum Einstecken und Verbinden mehrerer Einblasstecker mit den Merkmalen des Anspruchs 1 und ein Verfahren zur Verbindung von Lichtwellenleiterkabeln mit den Merkmalen des Anspruchs 18 vorgeschlagen. Vorteilhafte Ausgestaltungen der Erfindung ergeben sich aus den Unteransprüchen, der nachfolgenden Beschreibung sowie den Figuren.

Die Erfindung betrifft eine Kupplung zur Verbindung von Lichtwellenleitern, wobei wenigstens zwei Einblasstecker zur Bildung einer Steckverbindung der Lichtwellenleiteranschlüssen in die Kupplung einsteckbar sind.

Erfindungsgemäß weisen die Einblasstecker wenigstens einen Steckkontakt auf, mittels welchem ein Lichtwellenleiterkabel werksseitig vorkonfektioniert ist. Dadurch ist eine Anbindung eines Gebäudes an ein Telekommunikationsnetz mittels Lichtwellenleiterkabel mit geringem Montageaufwand vor Ort im Gebäude realisierbar. Denn durch die Konfektionierung, bzw. Vorkonfektionierung des Lichtwellenleiterkabelendes mittels des Steckkontaktes, kann das Bearbeiten des Lichtwellenleiterendes und ein Überprüfen des Dämpfungswiderstandes am Lichtwellenleiterende bereits werkseitig vorgenommen werden. Auch sind beispielsweise das Anschleifen der Stirnseite des Lichtwellenleiterkabelendes und das Anfertigen entsprechender Qualitätsprotokolle bereits werkseitig möglich, so dass derartige bisher vor Ort ausgeführte Tätigkeiten nicht mehr notwendig sind. Die kompakten Abmessungen eines Steckkontaktes lassen ferner ein Verlegen, beispielsweise ein Einblasen auch durch Leerrohre mit kleinstem Rohrdurchmesser zu.

Der Steckkontakt weist einen Ferrulenhalter auf, in welchem eine Ferrule zur Aufnahme der Lichtwellenleiter des Lichtwellenleiterkabels gehalten ist. Unter einem Ferrulenhalter ist im Sinne der Erfindung ein Bauteil zu verstehen, welches die sogenannte Ferrule hält. Die Ferrule ist ein Führungselement, vorzugsweise Führungsröhrchen, welches die Lichtwellenleiter des Lichtwellenleiterkabels aufnimmt. Die Ferrule kann beispielsweise aus Keramik, Kunststoff, Glas oder Metall bestehen. Es bietet sich an, dass die Ferrule in dem Ferrulenhalter festgehalten ist. Durch den Steckkontakt ist somit bereits das Lichtwellenleiterkabel im vorkonfektionierten Zustand bezüglich seines Lichtwellenleiters auf den späteren Einbauzustand vorbereitet und gegen äußere Einflüsse geschützt.

Erfindungsgemäß weisen die Einblasstecker eine das Lichtwellenleiterkabel aufnehmende Verriegelung, auch Adapter oder Verschlusskappe genannt, zum Verbinden des Steckkontakts mit der Kupplung auf. Hierdurch ist eine Anbindung an standardisierte Buchsen oder Kupplungen der Kommunikationssysteme, insbesondere bei Gebäudeanschlüssen, problemlos möglich. Der Einblasstecker kann z.B. auf einfache Weise zu einem Standard-LC-Steckverbinder gemacht werden, indem er mit dem Standard-Gehäuseteil verbunden wird. Dadurch ist somit auch ein Austausch des Gehäuseteils gegen ein anderes Gehäuseteil, bspw. eines anderen Anschlussstandards, in einfacher Weise möglich.

Ferner ist erfindungsgemäß eine Verdrehsicherung zwischen der Verriegelung und der Kupplung im endmontierten Zustand des Steckers durch die Steckverbindung in Längsrichtung des Lichtwellenleiterkabels zwischen Verriegelung und Kupplung gebildet, so dass die Lage des Lichtwellenleiterkabels im endmontierten Zustand des Einblassteckers in der Kupplung gesichert ist.

Die Verdrehsicherung des Einblassteckers ist so ausgebildet, dass nur ein einziger Formschluss zwischen Stecker und Kupplung herstellbar ist, d.h. es gibt nur eine Endposition, sodass man auch vorkonfektionierte Lichtleiter mit abgeschrägten Ferrulen-Endflächen (APC, "Angled Physical Contact") eindeutig ausgerichtet (in nur einer Position!) zueinander verbinden kann.

Erfindungsgemäß ist der Stecker als Einblasstecker ausgebildet, d.h. es werden optische Fasern mit Einblassteckern mittels Druckluft durch die Kabelführung zum Zielort geschoben und/oder geblasen.

Es kann vorgesehen sein, dass die Verriegelung auf den Steckkontakt, insbesondere einen Ferrulenhalter des Steckkontaktes, von dessen freien Ende aus montierbar ist. Dadurch ist sichergestellt, dass nach dem Verlegen des Lichtwellenleiterkabels mit dem daran vorkonditionierten Steckkontakt durch das Leerrohr die Verriegelung von hinten auf den aus dem Leerrohr herausstehenden Steckkontakt montiert werden kann.

Die Montage des Einblassteckers erfolgt üblicherweise dadurch, dass das Lichtwellenleiterkabel durch das Leerrohr soweit hindurchgeschoben oder eingeblasen wird, bis das freie Ende des Lichtwellenleiterkabels gegenüber dem Rohr hervorsteht. Vor Ort wird an dem freien Ende des Lichtwellenleiterkabels dann der Einblasstecker montiert, um daran das Kommunikationssystem des Gebäudes anschließen zu können.

Der Steckkontakt, insbesondere der Ferrulenhalter des Steckkontaktes, kann formschlüssig gegen axiales Verschieben gegenüber der Verriegelung gesichert sein, indem wenigstens ein gegenüber dem Innenumfang der Verriegelung erhabener bzw. hervorstehender Abschnitt in einem gegenüber dem Außenumfang des Steckkontaktes vertieften Abschnitt eingreift. Der wenigstens eine erhabene Abschnitt kann an der Verriegelung und der damit korrespondierende wenigstens eine vertiefte Abschnitt kann an dem Steckkontakt, insbesondere dem Ferrulenhalter, angeordnet sein. Denkbar ist natürlich auch die umgekehrte Anordnung, wonach der wenigstens eine erhabene Abschnitt an dem Steckkontakt und der wenigstens eine vertiefte Abschnitt an der Verriegelung angeordnet sind. Auch ist es denkbar, dass mehrere Abschnitte vorgesehen sind, von denen wenigstens ein erhabener Abschnitt und wenigstens ein vertiefter Abschnitt an der Verriegelung und die damit korrespondierenden Abschnitte in entsprechender Weise an dem Steckkontakt angeordnet sind.

Durch das Eingreifen des erhabenen Abschnittes in den vertieften Abschnitt ist in besonders einfacher Art und Weise eine Formschlussverbindung zwischen Verriegelung und Steckkontakt realisiert, durch welche der Steckkontakt relativ gegenüber der Verriegelung in seiner axialen Lage gesichert ist. Es ist natürlich denkbar, dass die Seitenwandungen des vertieften Abschnittes in einem gewissen Abstand zu den korrespondierenden Seitenwandungen des erhabenen Abschnittes liegen, so dass in einem gewissen begrenzten Maße eine axiale Verschieblichkeit des Steckkontaktes relativ gegenüber der Verriegelung zwischen den als Anschlag bzw. Begrenzung dienenden Seitenwandungen des vertieften Abschnittes möglich ist.

Bevorzugt sollten der erhabene Abschnitt und der damit korrespondierende vertiefte Abschnitt dazu ausgebildet sein, die formschlüssige Verdrehsicherung zwischen der Verriegelung und dem Steckkontakt zu bilden, beispielsweise indem die Verdrehsicherung durch die Außenumfangsfläche bzw. Innenumfangsfläche von erhabenem Abschnitt und vertieftem Abschnitt gebildet ist.

Besonders einfach kann dies realisiert werden, wenn der Steckkontakt mehrere über seinen Außenumfang verteilt angeordnete vertiefte Abschnitte oder erhabene Abschnitte aufweist, beispielsweise indem der Außenumfang des Steckkontaktes über einen vorgegebenen axialen Bereich als Mehrkant ausgebildet ist und der Verriegelung einen damit korrespondierenden als Mehrkantprofil ausgebildeten Innenumfang aufweist, wobei gleichzeitig der sich daran anschließende Außenumfang bzw. Innenumfang rund oder kreisrund ausgebildet ist. Das mehreckige Profil kann beispielsweise im Querschnitt in Art eines Vierkantes, Sechskantes oder Mehrkantes ausgebildet sein. Auch ist ein elliptisches Profil denkbar.

Gemäß einer ersten vorteilhaften Weiterbildung der erfindungsgemäßen Kupplung ist die Steckverbindung zwischen Verriegelung und Kupplung durch eine Nase o. dgl. Vorsprung der Verriegelung und durch eine komplementäre Öffnung in der Kupplung gebildet, insbesondere sind die Kupplung mit zwei Nasen o. dgl. Vorsprünge und die Verriegelung mit zwei dazu komplementären Öffnungen ausgebildet.

Dadurch kommt es zu der Steckverbindung, wenn die Kupplung auf die Verriegelung aufgeschoben wird, wodurch es zum Einrasten des an der Verriegelung angeordneten Vorsprunges in die korrespondierende Öffnung kommt.

Durch diese Steckverbindung ist eine stabile und haltbare Sicherung gegen Verdrehen und/oder gegen ein axiales Verschieben realisierbar. Die Anordnung von Nasen bzw. Vorsprüngen und der hierzu korrespondierenden Öffnungen wird vorzugsweise so gewählt, dass Hinterschneidungen vermieden werden, so dass die Teile kostengünstig beispielsweise als Spritzgussteile herstellbar sind. Besonders einfach herstellbar ist die Verriegelung, wenn sie nach einer Ausgestaltung der Erfindung aus Kunststoff ist, insbesondere mittels Spritzgussverfahren, Strangpressverfahren bzw. Extrusionsverfahren geformt ist.

Eine weitere vorteilhafte Ausführungsform sieht vor, dass die Steckverbindung zwischen Verriegelung und Kupplung in Art einer Bajonettverbindung ausgestaltet ist, wobei die Verriegelung mittels der Nasen o. dgl. Vorsprünge nach Art des Bajonett-Verschlusses durch eine Drehbewegung gegenüber der Kupplung in den Öffnungen festlegbar ist. Hierdurch ist auf eine einfache Weise eine sichere Verbindung zwischen Verriegelung und Kupplung gewährleistet. Falls nötig, ließe sich eine Bajonettverbindung auch wieder lösen. Diese Eigenschaft ist insbesondere vorteilhaft, falls (a) sich bei der Messung des Dämpfungswiderstandes nach Montage der Steckerverbinder herausstellt, dass der Dämpfungswiderstand zu hoch ist und daher die Lichtwellenleiter-Oberflächen gereinigt werden müssen, oder (b), falls die Lichtwellenleiterkabel falsch gesteckt wurden und die Paarungen nachträglich korrigiert werden müssen.

In einer weiteren Variante der Erfindung ist der Steckkontakt an der Kupplung im endmontierten Zustand des Steckers durch korrespondierende, im Querschnitt unrunde Wandungsabschnitte von Kupplung und Steckkontakt formschlüssig gegen Verdrehen und für eine eineindeutige Positionierung des Steckkontakts in der Kupplung gesichert, wobei wenigstens ein Abschnitt des Innenumfangs der Kupplung mit einem korrespondierenden Abschnitt des Außenumfangs des Steckkontaktes, insbesondere des Ferrulenhalters des Steckkontaktes, zusammenwirkt.

Dadurch sind eine stabile und haltbare Verdrehsicherung und darüber hinaus auch eine eineindeutige Positionierung auf einfache Weise, insbesondere mit geometrisch einfach zu realisierenden Querschnitten, ermöglicht. Als unrunde Querschnitte sind geometrische Querschnittsformen zu verstehen, welche von einer kreisrunden Querschnittsform abweichen. Als unrunder Querschnitt ist beispielsweise ein elliptischer Querschnitt oder ein viereckiger, insbesondere mehreckiger Querschnitt, beispielsweise in Art eines vierkantigen, sechskantigen oder mehrkantigen Bauteils, denkbar.

Eine verdrehsichere Verbindung der Verriegelung gegenüber der Kupplung kann durch eine mehreckige Umfangskontur an der Verriegelung realisiert sein, wobei die Kupplung eine mit dieser mehrkantigen Umfangskontur korrespondierende Innenumfangskontur aufweisen können.

Eine Sicherung gegen ein Verschieben in axialer Richtung kann ferner realisiert sein, indem die mehrkantige Umfangskontur gegenüber der Außenumfangsfläche der Verriegelung zumindest über Abschnitte des Außenumfanges vertieft bzw. abgesetzt ist. Diese Abschnitte dienen als Anschlag für die korrespondierende Innenumfangskontur der Kupplung in axialer Richtung. Damit ist eine Arretierung von Verriegelung und Kupplung auch in axialer Richtung realisiert.

Gemäß einer weiteren vorteilhaften Ausgestaltung der Erfindung ist vorgesehen, dass der Abschnitt des Innenumfangs der Kupplung als Abflachung entlang der Innenoberfläche der Kupplung und der Abschnitt des Steckkontakts, insbesondere des Ferrulenhalters als korrespondierende Abflachung entlang der Mantelfläche des Steckkontakts für eine Verdrehsicherung ausgebildet sind, so dass das Lichtwellenleiterkabel im endmontierten Zustand in einer vorbestimmten Position verdrehsicher in der Kupplung festgelegt ist.

Auf diese Weise ist nur ein einziger Formschluss zwischen Stecker und Kupplung herstellbar, d.h. es gibt nur eine Endposition, sodass man auch vorkonfektionierte Lichtleiter mit abgeschrägten Ferrulen-Endflächen (APC, "Angled Physical Contact") eindeutig ausgerichtet, beispielsweise in nur einer Position, zueinander verbinden kann. Auf diese Weise erhält man eine eineindeutige Positionierung.

In besonders vorteilhafter Weise ist die Kupplung aus zwei, insbesondere baugleichen, Gehäuseteilen gebildet, wobei die Gehäuseteile mittels einer Rastverbindung miteinander verbindbar sind und jedes Gehäuseteil wenigstens eine Rastnase und wenigstens ein komplementäres Rastauge aufweist. Auf diese Weise können die Vorteile bei der Herstellung und Verwendung von Gleichteilen erzielt werden, wenn die beiden Gehäuseteile als identische Bauteile ausgebildet sind. Die Rastverbindung kann lösbar ausgebildet sein, muss sie aber nicht sein. Rastverbindungen ermöglichen eine präzise, sichere und unmittelbare Verbindung von Bauteilen.

In einer Weiterbildung der Erfindung ist im endmontierten Zustand des Steckers in der Kupplung eine am Einblasstecker vormontierte Druckfeder vorgespannt und die Lage der Ferrule und des Einblassteckers ist in der Kupplung durch die Druckfeder sicherbar.

Der vorkonditionierte Steckkontakt kann die Ferrule, einen Ferrulenflansch sowie die Druckfeder aufweisen, welche vorzugsweise auf dem Aderkabel vormontiert ist. Durch die Druckfeder ist der Steckkontakt gegenüber der Einheit aus Kupplung und Verriegelung in einem gewissen Maße in axialer Richtung gegen den Druck der Feder verschieblich. Dazu stützt sich die Feder mit ihrem einen Ende gegen den Ferrulenflansch und mit ihrem anderen Ende gegen die Verriegelung ab. Weiterhin ist der Steckkontakt an der Verriegelung verdrehsicher gehalten. Dazu ist eine Stirnseite des Ferrulenflansches als mehrkantige konische Umfangsfläche ausgebildet, welche gegen eine korrespondierende Fläche der Verriegelung unter Vorspannung der Druckfeder in Wirkstellung tritt. Die Druckfeder sorgt dafür, dass die Stirnflächen von Eingangs- und Ausgangsstecker mit einem definierten Druck zusammengehalten werden, was eine minimale optische Dämpfung der Steckverbindung sicherstellt.

Insbesondere kann vorgesehen sein, dass der Steckkontakt an der Verriegelung gegen axiales Verschieben relativ gegenüber der Verriegelung, insbesondere gegen die Kraft der Druckfeder gehalten ist, wobei das dem Steckkontakt zugewandte Ende der Verriegelung einen kleineren Innendurchmesser aufweist als der Durchmesser der Druckfeder.

Denkbar ist, dass die Ferrule an ihrem freien Ende einen Anschliff aufweist. Insbesondere kann vorgesehen sein, dass die Oberfläche des freien Endes gegenüber der Längsachse des Lichtwellenleiterkabels geneigt ist. Beispielsweise kann der Neigungswinkel zwischen 6° und 12°, insbesondere bei 8° liegen. Bei einem schrägen Anschliff wird das an der schrägen Koppelstelle zurückreflektierte Lichtsignal aus dem Lichtwellenleiter herausgekoppelt, was zu einer höheren Rückflussdämpfung, auch als "Return Loss" bekannt, führt. Dies ist insbesondere bei sehr hohen Licht-Übertragungs-Datenraten hilfreich, da an der Übergangsstelle das rückgestreute Licht minimiert wird, welches zum Beispiel die Licht-Emissionsperformance des Sendeelements (z.B. Laser) negativ beeinträchtigen kann.

Gemäß einer vorteilhaften Variante der Erfindung weisen die Gehäuseteile eine Zentrierhilfe für die Montage der Kupplung auf, wobei die Zentrierhilfe durch wenigstens einen gegenüber der Oberfläche des einen Gehäuseteils hervorstehenden Stift gebildet ist, welcher beim miteinander Verbinden der Gehäuseteile in eine komplementäre Öffnung am zweiten Gehäuseteil eingreift, insbesondere dass beide Gehäuseteile wenigstens einen Stift und eine komplementäre Öffnung aufweisen. Auch durch diese Ausgestaltung wird erreicht, dass die Herstellungskosten der Kupplung reduziert werden können, da Gleichteile hergestellt werden.

Eine Ausgestaltung der Erfindung sieht vor, dass jedes Gehäuseteil wenigstens eine Einstecköffnung zum Einstecken des Steckers aufweist, wobei sich die Einstecköffnungen von den zu verbindenden Lichtwellenleiterkabeln im endmontierten Zustand der Kupplung gegenüberliegen und wobei die Form der Einstecköffnungen für einen sicheren Halt des Steckers in der Einstecköffnung an die Außenkontur des Steckers angepasst ist.

Besonders vorteilhaft ist eine Variante der Erfindung, wobei die Kupplung für jede Verbindung der Lichtwellenleiterkabel jeweils eine, vorzugsweise eingeschlitzte, Hülse, insbesondere Keramikhülse, zur Zentrierung der Ferrulen aufweist, wobei die Hülse derart in den Gehäuseteilen der Kupplung eingebracht ist, dass sie die Ferrulen der zu verbindenden Einblasstecker umgibt und im endmontierten Zustand zentriert.

Es ist vorteilhaft, dass die Außenform der Kupplung derart ausgestaltet ist, dass die Kupplung in eine Lichtwellenleiter-Spleisskassette einlegbar ist.

Vorteilhafterweise kann die Kupplung aus Kunststoff, beispielsweise Polybutylenterephthalat (PBT) hergestellt sein.

Ein weiterer Gedanke der Erfindung betrifft ein System zum Verbinden von Lichtwellenleiterkabeln mit einer oben beschriebenen Kupplung und vorzugsweise mit einem oben beschriebenen Einblasstecker.

Gemäß einer vorteilhaften Ausgestaltung des Systems ist vorgesehen, dass der Einblasstecker für eine Steckverbindung von Lichtwellenleiteranschlüssen wenigstens einen Steckkontakt aufweist, mittels welchem das Lichtwellenleiterkabel werksseitig vorkonfektioniert ist, wobei der Steckkontakt einen Ferrulenhalter aufweist, in welchem eine Ferrule zur Aufnahme der Lichtwellenleiter des Lichtwellenleiterkabels gehalten ist, wobei der Stecker eine das Lichtwellenleiterkabel aufnehmende Verriegelung zum Verbinden des Steckkontakts mit einer Kupplung oder mit einem Gehäuseteil, insbesondere einem standardisierten Gehäuseteil, für den Stecker zur Anbindung an eine Buchse oder dgl. Aufnahmeteil aufweist, wobei die Verriegelung auf den Steckkontakt von dessen freien Ende aus montierbar ist und wobei eine Verdrehsicherung zwischen der Verriegelung und der Kupplung oder dem Gehäuseteil im endmontierten Zustand des Steckers durch eine Steckverbindung zwischen Verriegelung und Kupplung oder Gehäuseteil gebildet ist.

Gemäß einer weiteren Ausgestaltung des Systems ist die Kupplung, insbesondere ein Gehäuseteil der Kupplung, mit einem Gehäuseteil einer weiteren Kupplung, insbesondere einer Standard-LC-Kupplung, verbindbar. Der LC-Stecker, auch lucent connector bzw. Standard-LC-Stecker genannt, gehört zu den gängigsten Lichtwellenleiter-Steckertypen.

Bei dieser Verbindung der beiden Gehäuseteile beider Kupplungen kann vorzugsweise wenigstens eine Rastnase der weiteren Kupplung in ein Rastauge der Kupplung und/oder wenigstens eine Rastnase der Kupplung in ein Rastauge der weiteren Kupplung eingreifen.

Das System zum Verbinden von Lichtwellenleiterkabeln betrifft eine Hybridversion der oben beschriebenen Kupplung, vorzugsweise zum Verbinden von einem oben beschriebenen Einblasstecker und eines standardgemäßen Steckers, wie beispielsweise einem LC-Stecker.

Hierbei besteht diese sogenannte Hybrid-Kupplung einseitig aus einem Anschluss für den oben beschriebenen Einblasstecker und auf der anderen Seite aus einem Anschluss für einen standardgemäßen Stecker, wie z.B. einem LC-Stecker.

Dies hat den Vorteil, dass eingangsseitig alle Dimensionen gegenüber einer Standard-Kupplung unverändert bleiben, und ausgangsseitig der erfindungsgemäße Einblasstecker montiert werden kann.

Weiterhin ist wegen den geometrisch geringeren Dimensionen gegenüber einer standardgemäßen LC-Steckverbindung, bestehend aus 2x LC-Stecker und einer LC-Kupplung, und Wegfall der Knicktülle auf der Einblasstecker-Seite der mögliche Einsatz in beengten Räumen von Vorteil.

Diese erfindungsgemäße Hybridversion kann besonders vorteilhaft in optischen Netzwerken eingesetzt werden, bei denen die Hybridversion auf der einen Seite das Netzwerk abschließt und auf der Gegenseite ein Standard-Lichtwellenleiterkabel für den Anschluss von Geräten genutzt wird.

Dies trifft beispielsweise bei den Verbindungen Glasfaser und Teilnehmer-Anschlussdose (TA), Glasfaser und Etagenverteiler (EV), Glasfaser und Gebäudeverteiler (GV) oder auch bei Geräteanschlussdosen oder Baugruppenträgern für Montage von Lichtwellenleiter-Splittern und Kupplungen zu.

Weiterhin weist die erfindungsgemäße Konfiguration des Einblassteckers mit der Hybrid-Kupplung Vorteile in Bezug auf negative Umwelteinflüsse gegenüber einer standardgemäßen Konfiguration, z.B. einer LC-Steckverbindung, auf. Da für die erfindungsgemäße Konfiguration kein Gehäuse und keine Knicktülle erforderlich sind, reduziert sich der Materialeinsatz pro Port/Faser um ca. 1 Gramm Polymer-Material. Bei einer Stückzahl von 10 Millionen Verbindungen entspricht dies einer Materialeinsparung von 10 t Polymer-Material. Hinzukommen die Einsparung der Energie für Fertigung, Transport und Entsorgung. Das erfindungsgemäße System kann daher durchaus als umweltschonend oder "grünes Produkt" bezeichnet werden.

Gemäß einem weiteren Erfindungsgedanken ist eine Lichtwellenleiter-Spleißkassette zum Verbinden von Lichtwellenleiterkabel mit einer oben beschriebenen Kupplung zum Aufnehmen mehrerer oben beschriebener Einblasstecker für eine Steckverbindung der Lichtwellenleiteranschlüsse vorgesehen.

In einer Lichtwellenleiter-Spleißbox kann wenigstens eine Lichtwellenleiter-Spleißkassette aufgenommen werden.

Ein weiterer unabhängiger Gedanke der Erfindung betrifft ein Verfahren zum Verlegen von Lichtwellenleiterkabeln, wobei die Enden von mindestens zwei miteinander zu verbindenden Lichtwellenleiterkabeln an einen Steckplatz verlegt werden, insbesondere durch ein Einblas-Verfahren durch ein Röhrensystem zum Steckplatz gefördert werden, und die Enden jeweils einen zuvor beschriebenen Einblasstecker für die Steckverbindung aufweisen und die Einblasstecker mittels einer Verriegelung in einer zuvor beschriebenen Kupplung positioniert und gegen ein Verdrehen gesichert werden.

Als "Fiber to the Home" (abgekürzt: "FTTH") bezeichnet man beispielsweise in der Telekommunikation das Verlegen von Lichtwellenleitern bis in die Wohnung eines Endkonsumenten. Selbstverständlich eignet sich das Verfahren auch für andere Anwendungsgebiete, die z.B. unter den Abkürzungen FTTL, FTTC, FTTN oder FTTB bekannt sind.

Das Lichtwellenleiterkabel kann mit einer Ferrule vorkonfektioniert sein.

Beim Verbinden des Einblassteckers mit der Kupplung kann eine auf einem Ferrulenhalter zum Halten der Ferrule vormontierte Druckfeder vorgespannt sein, wobei die Lage der Ferrule und des Lichtwellenleiterkabels in der Kupplung durch die Druckfeder gesichert werden kann.

Der Einblasstecker kann mittels Verriegelung mit der Kupplung über eine Steckverbindung verbunden werden.

Denkbar ist, dass der Einblasstecker mit einer auf der Ferrule aufgesteckten Staubschutzkappe in das Gehäuseteil eingesteckt werden kann. Hierdurch kann, im Gegensatz zum Stand der Technik, der Stecker mit Verriegelung am Gehäuseteil montiert werden, ohne die Staubschutzkappe auf der Ferrule nach dem Einblasen entfernen zu müssen. Das verhindert eine zusätzliche Verschmutzung der Steckerstirnfläche bis zum endgültigen Steckvorgang.

Die Verriegelung kann mit einem Schlitz ausgebildet und auf das Lichtwellenleiterkabel aufgerastet werden und die Verriegelung kann in Längsrichtung des Lichtwellenleiterkabels mit der Kupplung verbunden werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine perspektivische Explosionsdarstellung einer erfindungsgemäßen Kupplung zum Verbinden von Einblassteckern,
- Figur 2: ein Gehäuseteil der Kupplung gemäß Figur 1 in einer Front- und einer Draufsicht,
- Figur 3: den Einblasstecker mit Lichtwellenleiter in einer a) perspektivischen Explosionsdarstellung und b) zusammengesetzter Ansicht,
- Figur 4: eine Spleißkassette zum Aufnehmen der Kupplung gemäß Figur 1,
- Figur 5: ein Gehäuseteil zum Aufnehmen des Einblassteckers,
- Figur 6: das Gehäuseteil gemäß Figur 5 in weiteren Ansichten,
- Figur 7: eine weiteres System einer Verbindung zwischen der erfindungsgemäßen Kupplung und einer Standard-LC-Kupplung und
- Figur 8: eine Gegenüberstellung der Querschnitte der erfindungsgemäßen Kupplung mit einer Standard-LC-Kupplung.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

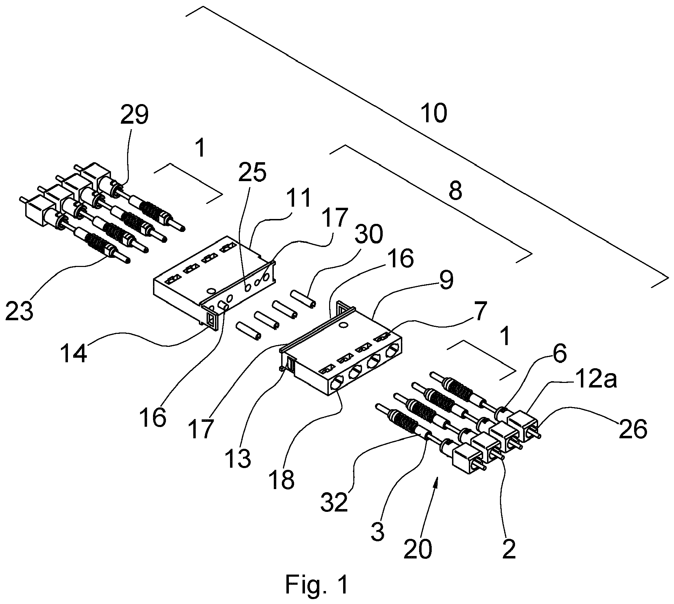

Aus Figur 1 geht in einer Explosionsdarstellung eine erfindungsgemäße Kupplung 8 zur Verbindung von Lichtwellenleitern hervor.

Die Kupplung 8 ist zum Einstecken mehrerer miteinander zu verbindender Einblasstecker 20 zur Bildung einer Steckverbindung der Lichtwellenleiteranschlüsse ausgebildet.

Der Lichtwellenleiter kann eine Glasfaser und/oder Kunststofffaser sein. Der Einblasstecker 20 ist besonders zum Anschließen eines Lichtwellenleiterkabels in einem Gebäude geeignet, bei der eine Verlegung des Lichtwellenleiterkabels von Verteilern zu dem Wohngebäude in einem Leerrohr stattfindet. Dabei ist der Einblasstecker 20 besonders für eine Verlegung in Leerrohren mit geringstem Durchmesser geeignet. Der Einblasstecker 20 kann mittels Druckluft durch das Leerrohr eingeblasen werden.

Um eine Verlegung des Lichtwellenleiterkabels durch das Leerrohr zu ermöglichen, weist der Stecker 20 mehrere Teile auf, mittels welchen ein Lichtwellenleiterkabel 2 vorkonfektioniert wird, also bereits verlegefertig realisiert ist. Zu diesen Teilen zählt ein Steckkontakt 1, welcher bevorzugt auf das freie Ende 3 des Lichtwellenleiterkabels 2, insbesondere auf das isolierungsfreie Ende des Lichtwellenleiterkabels 2, aufschiebbar ist.

Die Kupplung 8 und der Stecker 20 bilden ein System 10 zum Verbinden von Lichtwellenleiterkabeln 2.

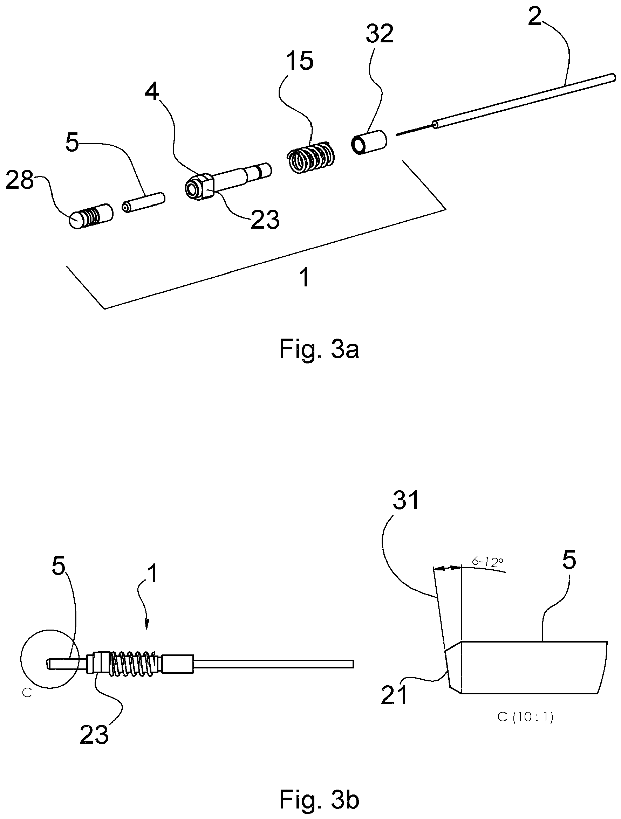

Gemäß Figur 3 ist der Einblasstecker mit Lichtwellenleiter in einer a) Explosionsdarstellung und b) zusammengesetzter Ansicht dargestellt.

Der Steckkontakt 1 weist einen in Figur 3 dargestellten Ferrulenhalter 4 auf, in welchem eine Ferrule 5 zur Aufnahme der Lichtwellenleiter des Lichtwellenleiterkabels 2 gehalten ist. Dazu ist die bevorzugt als dünnes Röhrchen ausgebildete Ferrule 5 mit einem Ende in den Ferrulenhalter 4 zumindest teilweise eingeschoben. Das Lichtwellenleiterkabel 2 kann in den Ferrulenhalter 4 sowie in die Ferrule 5 eingeklebt werden.

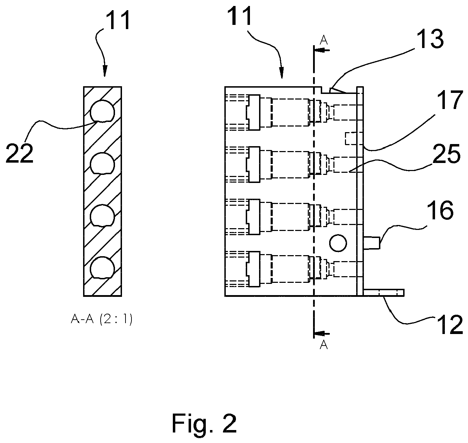

Die Ferrule 5 weist an ihrem freien Ende 21 einen Anschliff 31 auf, insbesondere kann die Oberfläche des freien Endes 21 gegenüber der Längsachse des Lichtwellenleiterkabels 2 geneigt sein, wie Figur 2 b) verdeutlicht. Der Neigungswinkel kann beispielsweise zwischen 6° und 12°, insbesondere bei etwa 8° liegen.

Der Steckkontakt 1 kann eine Aufpresshülse 32 aufweisen, welche auf den Ferrulenhalter 4 aufgepresst werden kann. Diese Aufpresshülse 32 geht beispielsweise aus den Figuren 1, 3 und 5 hervor.

Wie Figuren 1 und 2 weiter zeigen, umfasst der Einblasstecker 20 ferner eine das Lichtwellenleiterkabel 2 aufnehmende Verriegelung 12a zum Verbinden des Steckkontakts 1 mit der Kupplung 8. Die Verriegelung 12a kann auf den Steckkontakt 1 von dessen freien Ende 3 aus montiert werden. Die Verriegelung 12a besteht bevorzugt aus Kunststoff, wie beispielsweise Polybutylenterephthalat (PBT).

Eine Verdrehsicherung ist zwischen der Verriegelung 12a und der Kupplung 8 im endmontierten Zustand des Steckers 20 durch eine Steckverbindung in Längsrichtung des Lichtwellenleiterkabels 2 zwischen Verriegelung 12a und Kupplung 8 gebildet, so dass die Lage des Lichtwellenleiterkabels 2 im endmontierten Zustand des Einblassteckers 20 in der Kupplung 8 gesichert ist.

Insbesondere geht aus Figur 1 weiter hervor, dass die Steckverbindung zwischen Verriegelung 12a und Kupplung 8 durch eine Nase o. dgl. Vorsprung 6 der Verriegelung 12a und durch eine komplementäre Öffnung 7 in der Kupplung 8 gebildet ist. Im vorliegenden Ausführungsbeispiel sind die Verriegelung 12a mit zwei Nasen o. dgl. Vorsprünge 6 und die Kupplung 8 mit zwei dazu komplementären Öffnungen 7 ausgebildet.

Für eine besonders sichere und einfache Verbindung der Verriegelung mit der Kupplung ist die Steckverbindung zwischen Verriegelung 12a und Kupplung 8 in Art einer Bajonettverbindung ausgestaltet, wobei die Verriegelung 12a mittels der Nasen o. dgl. Vorsprünge 6 nach Art des Bajonett-Verschlusses durch eine Drehbewegung gegenüber der Kupplung 8 in den Öffnungen 7 festgelegt wird.

Die Verbindung erfolgt also über eine Steck-Dreh-Bewegung: Die beiden zu verbindenden Teile, d.h. die Verriegelung 12a und die Kupplung 8, werden mit den Vorsprüngen 6 in die Öffnungen 7 eingebracht. Durch die anschließende Drehbewegung werden beide Teile gegeneinandergepresst. Zur weiteren Sicherung der Verbindung kann zusätzlich eine Raste verwendet werden.

Aus der Figur 2 geht hervor, dass der Ferrulenhalter 4 an der Kupplung 8 im endmontierten Zustand des Steckers 20 durch korrespondierende, im Querschnitt unrunde Wandungsabschnitte von Kupplung 8 und Ferrulenhalter 4 formschlüssig gegen Verdrehen und für eine eineindeutige Positionierung des Steckkontakts 1 des Einblassteckers 20 gesichert ist. Hierbei wirkt wenigstens ein Abschnitt 22 des Innenumfangs der Kupplung 8 mit einem korrespondierenden Abschnitt 23 des Außenumfangs des Ferrulenhalters 4 zusammen. Der Abschnitt 22 der Kupplung 8 ist in Figur 2 zu erkennen, der Abschnitt 23 des Ferrulenhalters 4 ist insbesondere in Figuren 1, 3 und 5 ersichtlich.

Im vorliegenden Ausführungsbeispiel sind der Abschnitt 22 des Innenumfangs der Kupplung 8 als Abflachung entlang der Innenoberfläche der Kupplung 8 (vgl. Figur 2) und der Abschnitt 23 des Ferrulenhalters 4 des Einblassteckers 20 als korrespondierende Abflachung entlang der Mantelfläche des Ferrulenhalters 4 ausgebildet (vgl. Figur 1, 3 und 5). Auf diese Weise ist die Verdrehsicherung gebildet, so dass das Lichtwellenleiterkabel 2 im endmontierten Zustand in einer vorbestimmten Position verdrehsicher in der Kupplung 8 festgelegt ist.

Aus den Figuren 1 und 2 ist weiter zu entnehmen, dass die Kupplung 8 aus zwei, vorliegend baugleichen Gehäuseteilen 9, 11 gebildet ist. Diese Gehäuseteile 9, 11 sind mittels einer Rastverbindung miteinander verbindbar, wobei jedes Gehäuseteil 9, 11 im vorliegenden Ausführungsbeispiel wenigstens eine Rastnase 13 und wenigstens ein komplementäres Rastauge 14 aufweist, wie Figur 1 weiter verdeutlicht. Diese Rastverbindung kann lösbar ausgebildet sein.

Im vorliegenden Ausführungsbeispiel gemäß Figuren 1 und 2 weisen die Gehäuseteile 9, 11 eine Zentrierhilfe für die Montage der Kupplung 8 auf, welche vorliegend durch einen gegenüber der Oberfläche des einen Gehäuseteils 9 hervorstehender Stift 16 gebildet ist, der in eine komplementäre Öffnung 17 am zweiten Gehäuseteil 11 eingreift. Gemäß Figuren 1 und 2 weisen beide Gehäuseteile 9, 11 jeweils einen Stift 16 und eine komplementäre Öffnung 17 auf. Auf diese Weise ist nicht nur eine sichere Verbindung beider Gehäuseteile 9, 11 gewährleistet sondern darüber hinaus können die Gehäuseteil 9, 11 als Gleichteile ausgebildet sein.

Die Figuren 1 und 2 zeigen weiter, dass jedes Gehäuseteil 9, 11 mehrere Einstecköffnungen 18 zum Einstecken der Einblasstecker 20 aufweist. Diejenigen Einstecköffnungen 18 der zu verbindenden Lichtwellenleiterkabeln 2 liegen sich im endmontierten Zustand der Kupplung 8 gegenüber. Die Form der Einstecköffnungen 18 ist für einen sicheren Halt des Steckers 20 in der Einstecköffnung 18 an die Außenkontur des Steckers 20 angepasst.

Aus den Figuren 1, 3 und 5 geht ferner hervor, dass im endmontierten Zustand des Steckers 20 in der Kupplung 8 eine am Einblasstecker vormontierte Druckfeder 15 vorgespannt ist, so dass die Lage der Ferrule 5 und des Einblassteckers 20 in der Kupplung 8 durch die Druckfeder 15 gesichert werden kann.

Durch die Druckfeder 15 ist der Einblasstecker 20 gegenüber der Einheit aus Verriegelung 12a und Kupplung 8 in einem gewissen Maße in axialer Richtung gegen den Druck der Feder verschieblich. Dazu kann sich die Feder 15 mit ihrem einen Ende gegen den Ferrulenflansch und mit ihrem anderen Ende gegen die Verriegelung 12a abstützen.

Insbesondere Figur 1 zeigt, dass die Kupplung 8 für die Verbindung der Lichtwellenleiterkabel 2 jeweils eine, vorliegend eingeschlitzte Hülse 30, insbesondere Keramikhülse, zur Zentrierung der Ferrulen 5 in der Kupplung 8 aufweist. Diese Hülse 30 ist derart in den Gehäuseteilen 9, 11 der Kupplung 8 eingebracht, dass sie die Ferrulen 5 der zu verbindenden Einblasstecker 20 umgibt und im endmontierten Zustand zentriert. Vorliegend weist das den Einstecköffnungen 18 der Gehäuseteile 9, 11 gegenüberliegende Ende der Gehäuseteile 9, 11 Öffnungen 25 zum Aufnehmen der Hülse 30 auf, wie insbesondere aus Figur 1 hervorgeht.

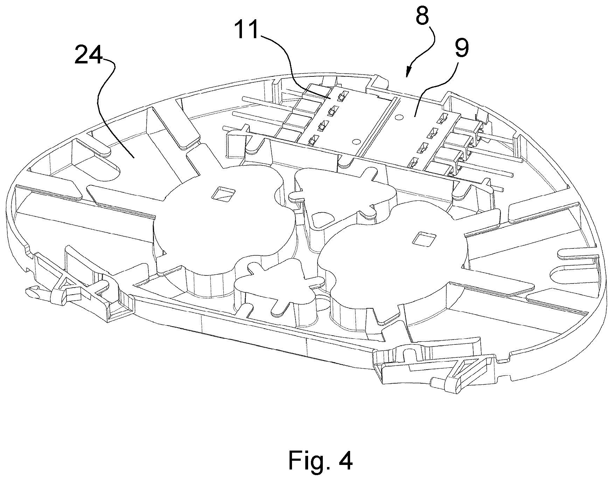

In Figur 4 ist eine Lichtwellenleiter-Spleisskassette 24 dargestellt, in welcher die Kupplung 8 eingelegt ist.

Der oben beschriebene Einblasstecker 20 kann nicht nur an der oben beschriebenen Kupplung 8 sondern auch an einem, insbesondere standardisierten Gehäuseteil 19 aufgenommen werden.

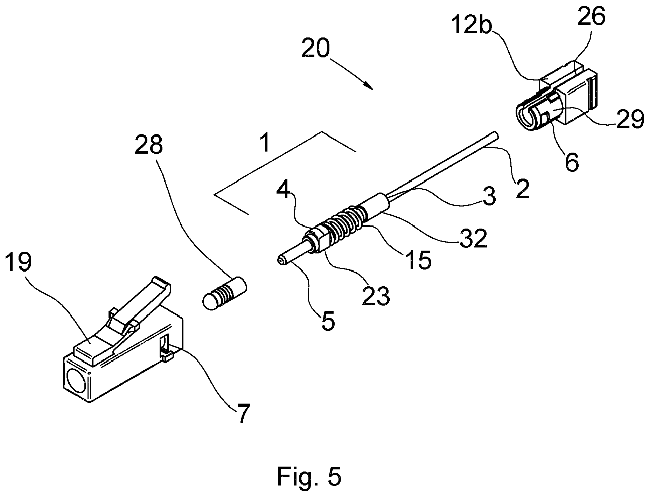

Figuren 3 und 5 zeigen - in schematischer Darstellung - eine weitere mögliche Ausführungsform eines Einblassteckers 20 für eine Steckverbindung von Lichtwellenleiteranschlüssen.

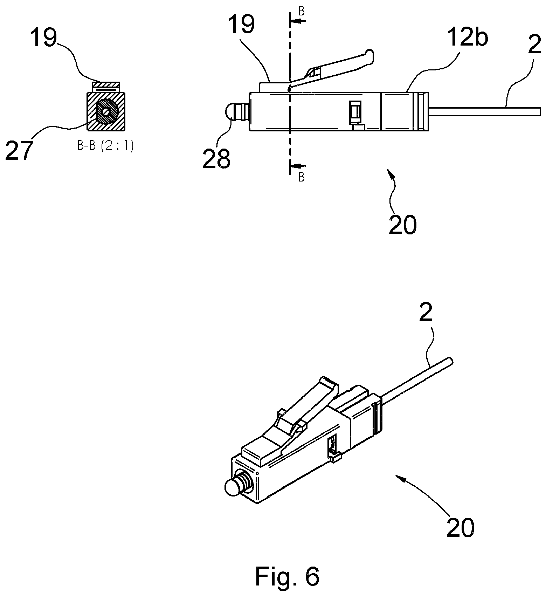

Im Fall der Aufnahme des Steckers 20 im Gehäuseteil 19 (vgl. Figuren 5 und 6) ist der Steckkontakt 1 bzw. der Einblasstecker 20, insbesondere der Ferrulenhalter 4, mit der Ferrule 5 zumindest teilweise in dem Gehäuseteil 19 aufgenommen. Das Gehäuseteil 19 ist beispielsweise ein standardisiertes Gehäuseteil, wie es üblicherweise zum Anschluss von Lichtwellenleiterkabeln in Kommunikationssystemen zum Einsatz kommt.

Im vorliegenden Ausführungsbeispiel gemäß der Figuren 5 und 6 ist der Einblasstecker 20, insbesondere der Ferrulenhalter 4, unter Zwischenschaltung eines als Verriegelung 12b ausgebildeten Adapters in dem Gehäuseteil 19 gehalten. Die Verriegelung 12b ist bevorzugt selbst drehfest innerhalb des Gehäuseteiles 19 verriegelt. Der Ferrulenhalter 4 ist durch den korrespondierenden Abschnitt Steckkontakt 23 im Gehäuseteil 19 verdrehgesichert.

Es ist ferner denkbar, dass die Verbindung zwischen Verriegelung 12b und Gehäuseteil 19 ebenfalls in Art einer Bajonettverbindung ausgestaltet ist, um eine besonders sichere und einfache Verbindung der Verriegelung 12b mit dem Gehäuseteil 19 herzustellen. Ähnlich wie bei der Bajonettverbindung zwischen Verriegelung 12a und Kupplung 8 kann die Verriegelung 12b mittels Nasen o. dgl. Vorsprünge durch eine Drehbewegung gegenüber dem Gehäuseteil 19 in Öffnungen festgelegt werden.

Die Verriegelung 12b kann auf den Steckkontakt 1 von dessen freien Ende 3 aus montiert werden.

Insbesondere kann mittels Gehäuseteil 19 und der Verriegelung 12b ein Steckergehäuse gebildet werden, wie die Figuren 5 und 6 zeigen. Hierbei wird die Verriegelung 12b in Längsrichtung des Aderkabels 2 mit dem Gehäuseteil 19 verbunden. Vorliegend ist die Verriegelung 12b mit einem Schlitz 26 zum Aufrasten auf das Aderkabel 2 ausgebildet. Mit Steckverbindern konfektionierte Aderkabel 2 sind beispielsweise mit einem Sekundär-Coating ausgebildet und haben einen Durchmesser von 0,9mm.

Der Schlitz 26 kann für eine derartige Ausführungsform des Aderkabels 2 sehr schmal ausgebildet werden. Es sind jedoch auch Glasfaserkabel mit anderen Durchmessern, beispielsweise 2,4mm oder 3mm, bekannt. Der Schlitz 26 ist daher entsprechend der Anwendung auszulegen. Durch die Verbindung der Verschlusskappe bzw. Verriegelung 12b mit dem Gehäuseteil 19 in Längsrichtung des Aderkabels 2 ist die Druckfeder 5 im Verbinden vorspannbar. Dadurch ist eine besonders einfache Handhabung möglich. Es ist jedoch auch denkbar, das Gehäuse mit zwei Gehäuseschalen auszubilden, in welche das Aderkabel 2 eingebettet wird.

Wie beispielsweise aus Figuren 5 und 6 weiter ersichtlich ist, weist die Verriegelung 12b eine Verdrehsicherung gegenüber dem Gehäuseteil 19 auf. Bevorzugt weist die Verriegelung 12b hierzu an wenigstens einer Außenumfangsfläche 29 wenigstens eine Nase oder der gleichen Vorsprung 6 auf, welche in einer entsprechende Öffnung 7 im Gehäuseteil 19 aufgenommen wird, wenn das Gehäuseteil 19 auf der Verriegelung 12b montiert wird. Damit ist eine Sicherung gegen Verschieben in Längsrichtung des Lichtwellenleiterkabels 2 gebildet.

Die Verriegelung 12b besteht bevorzugt aus Kunststoff, wie beispielsweise Polybutylenterephthalat (PBT).

Wie aus Figur 5 weiter ersichtlich ist, weist der Ferrulenhalter 4 eine Verdrehsicherung auf, welche mit der Verriegelung 12b in Wirkstellung tritt.

Die Verdrehsicherung des Ferrulenhalters 4 ist durch zumindest einen Abschnitt seiner Außenfläche gebildet, welche mit einem korrespondierenden Abschnitt des Innenumfangs der Verriegelung 12b in Wirkstellung tritt. Auf diese Weise ist der Ferrulenhalter 4 des Steckkontakts 1 an dem Gehäuseteil 19 im endmontierten Zustand des Steckers 20 durch korrespondierende, im Querschnitt unrunde Wandungsabschnitte 27 von Gehäuseteil 19 und Ferrulenhalter 4 formschlüssig gegen Verdrehen und für eine eineindeutige Positionierung des Einlassteckers 20 gesichert ist. Wenigstens ein Abschnitt 27 des Innenumfangs des Gehäuseteils 19 wirkt mit einem korrespondierenden Abschnitt 23 des Außenumfangs des Ferrulenhalters 4 zusammen (vgl. Figuren 5 und 6).

Aus der Figuren 5 und 6 geht weiter hervor, dass der Stecker 20 eine Schutzkappe, insbesondere Staubschutzkappe 28 aufweist, welche über die Ferrule 5 geschoben ist und somit das aus dem Gehäuseteil 19 herausragende freie Ende der Ferrule 5 schützt. Die Schutzkappe 28 ist lösbar auf die Ferrule 5 aufgeschoben und kann vor dem Einstecken des Steckers 20 in die (nicht dargestellte) entsprechende Buchse oder Kupplung des Hausanschlusses abgenommen werden. Die Schutzkappe 28 ist vorzugsweise werkseitig auf die Ferrule 5 aufgeschoben und wird vor Herstellung der Verbindung mit dem Hausanschluss abgezogen.

Der Einblasstecker 20 wird folgendermaßen konfektioniert:
Es wird beispielsweise werkseitig das Lichtwellenleiterkabel 2 endseitig abisoliert und in den Ferrulenhalter 4 mit Ferrule 5 des Steckers 20 eingeführt und verklebt. Nach Aushärten eines Klebers kann im nächsten Arbeitsschritt das Anschleifen und Polieren der Stirnseite des Lichtwellenleiters erfolgen. Anschließend wird Staubschutzkappe 28 zum Schutz der Steckerstirnfläche aufgesteckt.

Diese Arbeitsschritte sind bereits werkseitig ausführbar, so dass aufgrund dieser Vorkonfektionierung der gesamte Montageaufwand des Steckers 20 wesentlich kostengünstiger und viel präziser als bisher ausführbar ist.

Das so vorkonfektionierte Kabel wird durch das (nicht dargestellte) Leerrohr von einem Gebäudeanschluss zu einem Verteiler oder umgekehrt verschoben, beispielsweise mittels Druckluft eingeblasen. Der vorliegende Stecker 20 ist als Einblasstecker ausgebildet.

An dem aus dem (nicht dargestellten) Leerrohr herausragenden vorkonfektionierten Stecker 20 wird anschließend das, insbesondere standardisierte Gehäuseteil 19 unter Zwischenschaltung der Verriegelung 12b vor Ort montiert.

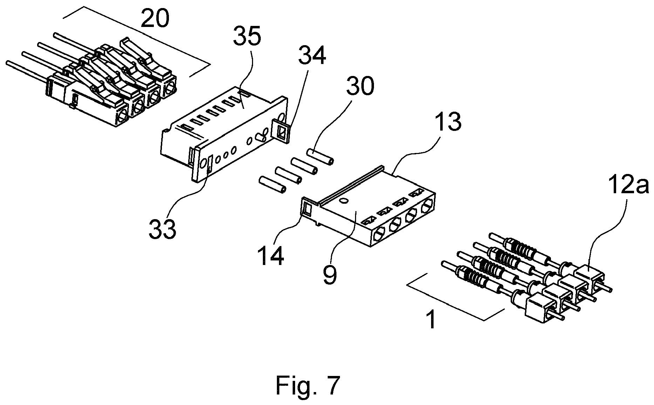

Aus Figur 7 geht ein weiteres System einer Verbindung zwischen der erfindungsgemäßen Kupplung 8 und einer weiteren, insbesondere einer Standard-LC-Kupplung hervor. Bei dieser Ausführungsform kann die Kupplung 8, insbesondere ein Gehäuseteil 9 der Kupplung 8 mit einem Gehäuseteil 35 der weiteren Kupplung, insbesondere der Standard-LC-Kupplung, verbunden werden. Der LC-Stecker bzw. Standard-LC-Stecker gehört zu den gängigsten Lichtwellenleiter-Steckertypen.

Bei der in Figur 7 dargestellten Ausführungsform greift ein Rastauge 14 der Kupplungshälfte 9 in eine Rastnase 33 der weiteren Kupplungshälfte und eine Rastnase 13 der Kupplungshälfte 9 in ein Rastauge 34 der weiteren Kupplunghälfte ein. Dieses System kann auch als Hybridversion einer Kupplung bezeichnet werden, da ein Einblasstecker 20, wie oben beschrieben, mit einem standardgemäßen Stecker, vorliegend einem LC-Stecker, verbindbar ist. Diese Hybrid-Kupplung besteht im vorliegenden Ausführungsbeispiel einseitig aus dem Anschluss für den oben beschriebenen Einblasstecker 20 und auf der anderen Seite aus einem Anschluss für einen standardgemäßen Stecker, wie z.B. einem LC-Stecker.

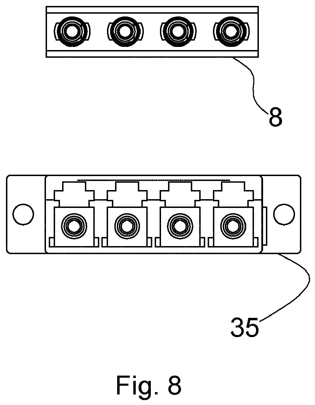

Aus Figur 8 geht eine Gegenüberstellung der Querschnitte der erfindungsgemäßen Kupplung 8 mit einer Standard-LC-Kupplung hervor.

### Bezugszeichenliste

- 1: Steckkontakt
- 2: Lichtwellenleiterkabel
- 3: freies Ende Steckkontakt
- 4: Ferrulenhalter
- 5: Ferrule
- 6: Vorsprung - Verbindung Verriegelung-Kupplung
- 7: Öffnung - Verbindung Verriegelung-Kupplung
- 8: Kupplung
- 9: Gehäuseteil - Kupplung
- 10: System
- 11: Gehäuseteil - Kupplung
- 12a: Verriegelung an Kupplung
- 12b: Verriegelung an Gehäuseteil
- 13: Rastnase - Gehäuseteil
- 14: Rastauge - Gehäuseteil
- 15: Druckfeder
- 16: Stift am Gehäuseteil
- 17: korrespondierende Öffnung am Gehäuseteil
- 18: Einstecköffnung
- 19: Gehäuseteil
- 20: Einblasstecker
- 21: freies Ende der Ferrule
- 22: Abschnitt Verriegelung Kupplung
- 23: korrespondierender Abschnitt Steckkontakt
- 24: Lichtwellenleiter-Spleißkassette
- 25: Öffnung für Hülse
- 26: Schlitz
- 27: Abschnitt Gehäuseteil
- 28: Staubschutzkappe
- 29: Außenumfangsfläche
- 30: Keramikhülse
- 31: Anschliff
- 32: Aufpresshülse
- 33: Rastnase weitere Kupplung
- 34: Rastauge weitere Kupplung
- 35: Gehäuseteil weitere Kupplung

## Patentansprüche

1. Kupplung (8) zur Verbindung von Lichtwellenleitern, wobei wenigstens zwei Einblasstecker (20) zur Bildung einer Steckverbindung der Lichtwellenleiteranschlüsse in die Kupplung (8) einsteckbar sind und die Einblasstecker (20) wenigstens einen Steckkontakt (1) aufweisen, mittels welchem ein Lichtwellenleiterkabel (2) werksseitig vorkonfektioniert ist und der Steckkontakt (1) einen Ferrulenhalter (4) aufweist, in welchem eine Ferrule (5) zur Aufnahme der Lichtwellenleiter des Lichtwellenleiterkabels (2) gehalten ist, wobei die Einblasstecker (20) eine das Lichtwellenleiterkabel (2) aufnehmende Verriegelung (12a) zum Verbinden des Steckkontakts (1) mit der Kupplung (8) aufweisen und eine Verdrehsicherung zwischen der Verriegelung (12a) und der Kupplung (8) im endmontierten Zustand des Steckers (20) durch die Steckverbindung in Längsrichtung des Lichtwellenleiterkabels (2) zwischen Verriegelung (12a) und Kupplung (8) gebildet ist, so dass die Lage des Lichtwellenleiterkabels (2) im endmontierten Zustand des Einblassteckers (20) in der Kupplung (8) gesichert ist.

2. Kupplung (8) nach Anspruch 1, **dadurch gekennzeichnet, dass** die Steckverbindung zwischen Verriegelung (12a) und Kupplung (8) durch eine Nase o. dgl. Vorsprung (6) der Verriegelung (12a) und durch eine komplementäre Öffnung (7) in der Kupplung (8) gebildet ist, insbesondere dass die Kupplung (8) mit zwei Nasen o. dgl. Vorsprünge (6) und die Verriegelung (12a) mit zwei dazu komplementären Öffnungen (7) ausgebildet sind.

3. Kupplung (8) nach Anspruch 2, **dadurch gekennzeichnet, dass** die Steckverbindung zwischen Verriegelung (12a) und Kupplung (8) in Art einer Bajonettverbindung ausgestaltet ist, wobei die Verriegelung (12a) mittels der Nasen o. dgl. Vorsprünge (6) nach Art des Bajonett-Verschlusses durch eine Drehbewegung gegenüber der Kupplung (8) in den Öffnungen (7) festlegbar ist.

4. Kupplung (8) nach einem der Ansprüche 1 bis 3, **dadurch gekennzeichnet, dass** der Steckkontakt (1) an der Kupplung (8) im endmontierten Zustand des Steckers (20) durch korrespondierende, im Querschnitt unrunde Wandungsabschnitte von Kupplung (8) und Steckkontakt (1) formschlüssig gegen Verdrehen und für eine eineindeutige Positionierung des Steckkontakts (1) in der Kupplung (8) gesichert ist, wobei wenigstens ein Abschnitt (22) des Innenumfangs der Kupplung (8) mit einem korrespondierenden Abschnitt (23) des Außenumfangs des Steckkontaktes (1), insbesondere des Ferrulenhalters (4) des Steckkontaktes (1), zusammenwirkt.

5. Kupplung (8) nach Anspruch 4, **dadurch gekennzeichnet, dass** der Abschnitt (22) des Innenumfangs der Kupplung (8) als Abflachung entlang der Innenoberfläche der Kupplung (8) und der Abschnitt (23) des Steckkontakts (1), insbesondere des Ferrulenhalters (4) als korrespondierende Abflachung entlang der Mantelfläche des Steckkontakts (1) für eine Verdrehsicherung ausgebildet sind, so dass das Lichtwellenleiterkabel (2) im endmontierten Zustand in einer vorbestimmten Position verdrehsicher in der Kupplung (8) festgelegt ist.

6. Kupplung (8) nach einem der Ansprüche 1 bis 5, **dadurch gekennzeichnet, dass** sie aus zwei, insbesondere baugleichen, Gehäuseteilen (9, 11) gebildet ist.

7. Kupplung (8) nach Anspruch 6, **dadurch gekennzeichnet, dass** die Gehäuseteile (9, 11) mittels einer Rastverbindung miteinander verbindbar sind, wobei jedes Gehäuseteil (9, 11) wenigstens eine Rastnase (13) und wenigstens ein komplementäres Rastauge (14) aufweist.

8. Kupplung (8) nach einem der vorherigen Ansprüche, **dadurch gekennzeichnet, dass** im endmontierten Zustand des Steckers (20) in der Kupplung (8) eine am Einblasstecker vormontierte Druckfeder (15) vorgespannt ist und die Lage der Ferrule (5) und des Einblassteckers (20) in der Kupplung (8) durch die Druckfeder (15) sicherbar ist.

9. Kupplung (8) nach einem der vorherigen Ansprüche, **dadurch gekennzeichnet, dass** die Gehäuseteile (9, 11) eine Zentrierhilfe für die Montage der Kupplung (8) aufweisen, wobei die Zentrierhilfe durch wenigstens einen gegenüber der Oberfläche des einen Gehäuseteils (9) hervorstehenden Stift (16) gebildet ist, welcher beim miteinander Verbinden der Gehäuseteile (9, 11) in eine komplementäre Öffnung (17) am zweiten Gehäuseteil (11) eingreift, insbesondere dass beide Gehäuseteile (9, 11) wenigstens einen Stift (16) und eine komplementäre Öffnung (17) aufweisen.

10. Kupplung (8) nach einem der vorherigen Ansprüche, **dadurch gekennzeichnet, dass** jedes Gehäuseteil (9, 11) wenigstens eine Einstecköffnung (18) zum Einstecken des Steckers (20) aufweist, wobei sich die Einstecköffnungen (18) von den zu verbindenden Lichtwellenleiterkabeln (2) im endmontierten Zustand der Kupplung (8) gegenüberliegen und wobei die Form der Einstecköffnungen (18) für einen sicheren Halt des Steckers (20) in der Einstecköffnung (18) an die Außenkontur des Steckers (20) angepasst ist.

11. Kupplung (8) nach einem der vorherigen Ansprüche, **dadurch gekennzeichnet, dass** die Kupplung (8) für die Verbindung der Lichtwellenleiterkabel (2) jeweils eine, vorzugsweise eingeschlitzte, Hülse (30), insbesondere Keramikhülse, zur Zentrierung der Ferrulen (5) aufweist, wobei die Hülse (30) derart in den Gehäuseteilen 9, 11 der Kupplung 8 eingebracht ist, dass sie die Ferrulen 5 der zu verbindenden Einblasstecker 20 umgibt und im endmontierten Zustand zentriert.

12. Kupplung (8) nach einem der vorherigen Ansprüche, **dadurch gekennzeichnet, dass** die Außenform der Kupplung (8) derart ausgestaltet ist, dass die Kupplung (8) in eine Lichtwellenleiter-Spleisskassette (24) einlegbar ist.

13. Kupplung (8) nach einem der vorherigen Ansprüche, **dadurch gekennzeichnet, dass** sie aus Kunststoff, beispielsweise Polybutylenterephthalat (PBT) hergestellt ist.

14. System (10) zum Verbinden von Lichtwellenleiterkabeln (2) mit einer Kupplung (8) nach einem der Ansprüche 1 bis 13 und mit wenigstens einem Einblasstecker (20).

15. System (10) nach Anspruch 14, **dadurch gekennzeichnet, dass** der Einblasstecker (20) für eine Steckverbindung von Lichtwellenleiteranschlüssen wenigstens einen Steckkontakt (1) aufweist, mittels welchem das Lichtwellenleiterkabel (2) werksseitig vorkonfektioniert ist, wobei der Steckkontakt (1) einen Ferrulenhalter (4) aufweist, in welchem eine Ferrule (5) gehalten ist, wobei der Stecker (20) eine das Lichtwellenleiterkabel (2) aufnehmende Verriegelung (12a, 12b) zum Verbinden des Steckkontakts (1) mit einer Kupplung (8) oder mit einem Gehäuseteil (19), insbesondere einem standardisierten Gehäuseteil, für den Stecker (20) zur Anbindung an eine Buchse oder dgl. Aufnahmeteil aufweist, wobei die Verriegelung (12a, 12b) auf den Steckkontakt (1) von dessen freien Ende (3) aus montierbar ist und wobei eine Verdrehsicherung zwischen der Verriegelung (12a, 12b) und der Kupplung (8) oder dem Gehäuseteil (19) im endmontierten Zustand des Steckers (20) durch eine Steckverbindung zwischen Verriegelung (12) und Kupplung (8) oder Gehäuseteil (19) gebildet ist.

16. System (10) nach Anspruch 14 oder 15, **dadurch gekennzeichnet, dass** die Kupplung (8), insbesondere ein Gehäuseteil (9) der Kupplung (8) mit einem Gehäuseteil (35) einer weiteren Kupplung, insbesondere einer Standard-LC-Kupplung, verbindbar ist, wobei bei einer Verbindung vorzugsweise wenigstens eine Rastnase (33) des Gehäuseteils (35) der weiteren Kupplung in ein Rastauge (14) des Gehäuseteils (9) der Kupplung (8) und/oder wenigstens eine Rastnase (13) des Gehäuseteils (9) der Kupplung (8) in ein Rastauge (34) des Gehäuseteils (35) der weiteren Kupplung eingreift.

17. Lichtwellenleiter-Spleißkassette (24) zum Verbinden von Lichtwellenleiterkabel (2) mit einer Kupplung (8) nach einem der Ansprüche 1 bis 13 zum Aufnehmen mehrerer Einblasstecker (20) für eine Steckverbindung der Lichtwellenleiteranschlüsse.

18. Lichtwellenleiter-Spleißbox mit wenigstens einer Lichtwellenleiter-Spleißkassette (24) nach Anspruch 17.

19. Verfahren zum Verlegen von Lichtwellenleiterkabel (2), wobei die Enden von mindestens zwei Lichtwellenleiterkabeln (2) an einem Steckplatz verlegt werden und die Enden jeweils einen Einblasstecker (20) für die Steckverbindung aufweisen, wobei die Einblasstecker (20) mittels einer Verriegelung (12a, 12b) in einer Kupplung (8) nach einem der Ansprüche 1 bis 13 oder einem, insbesondere standardisierten Gehäuseteil (19) positioniert und gegen ein Verdrehen gesichert werden.

20. Verfahren nach Anspruch 19, **dadurch gekennzeichnet, dass** das Lichtwellenleiterkabel (2) mit einer Ferrule (5) vorkonfektioniert wird.

21. Verfahren nach Anspruch 19 oder 20, **dadurch gekennzeichnet, dass** beim Verbinden des Einblassteckers (20) mit der Kupplung (8) eine auf einem Ferrulenhalter (4) zum Halten der Ferrule (5) vormontierte Druckfeder (15) vorgespannt wird, wobei die Lage der Ferrule (5) und des Lichtwellenleiterkabels (2) in der Kupplung (8) oder dem Gehäuseteil (19) durch die Druckfeder (15) gesichert wird.

22. Verfahren nach einem der Ansprüche 19 bis 21, **dadurch gekennzeichnet, dass** der Einblasstecker (20) mittels Verriegelung (12a, 12b) mit der Kupplung (8) oder dem Gehäuseteil (19) durch eine Steckverbindung verbunden wird.

23. Verfahren nach einem der Ansprüche 19 bis 22, **dadurch gekennzeichnet, dass** der Einblasstecker (20) mit einer auf der Ferrule (5) aufgesteckten Staubschutzkappe (28) in die Kupplung (8) oder das Gehäuseteil (19) eingesteckt wird.

24. Verfahren nach einem der Ansprüche 19 bis 23, **dadurch gekennzeichnet, dass** die Verriegelung (12a, 12b) mit einem Schlitz (26) ausgebildet ist und auf das Lichtwellenleiterkabel (2) aufgerastet wird und die Verriegelung (12a, 12b) in Längsrichtung des Lichtwellenleiterkabels (2) mit der Kupplung (8) verbunden wird.
